**Europäisches Patentamt**

**European Patent Office**

**Office européen des brevets**

(19)

(11) Veröffentlichungsnummer: **0 154 960**
A1

(12) # EUROPÄISCHE PATENTANMELDUNG

(21) Anmeldenummer: 85102738.3

(51) Int. Cl.⁴: **G 01 K 1/14**

(22) Anmeldetag: 11.03.85

(30) Priorität: 15.03.84 DE 8407876 U
27.03.84 DE 8409349 U

(43) Veröffentlichungstag der Anmeldung: 18.09.85
Patentblatt 85/38

(84) Benannte Vertragsstaaten: AT BE CH FR IT LI NL SE

(71) Anmelder: Elster AG, Mess- und Regeltechnik,
Industriestrasse 16, D-6700 Ludwigshafen (DE)
Anmelder: M.K. Juchheim GmbH & Co.,
Moltkestrasse 13-31, D-6400 Fulda (DE)

(72) Erfinder: Hirschberg, Walter, Hauptstrasse 88,
D-6309 Münzenberg 1 (DE)
Erfinder: Schnellbächer, Hans, Dipl.-Ing.,
Karlsbaderstrasse 5, D-6842 Bürstadt (DE)

(74) Vertreter: Patentanwälte Dipl.-Ing. F.W. Möll Dipl.-Ing.
H.Ch. Bitterich, Langstrasse 5 Postfach 2080,
D-6740 Landau (DE)

(54) Messvorrichtung zum Messen der Temperatur in einer Rohrleitung.

(57) Zur Erfassung der Messgrössen eines eine Rohrleitung durchströmenden Mediums mit einem quer zur Strömungsrichtung in das Medium ragenden Messfühler (17) dient ein in die Rohrleitung einsetzbares Schieber-Absperrventil (1), dessen Schieberelement (4) auf einer Seite koaxial zu seiner Drehachse (5) eine Bohrung (14) aufweist, in die der Messfühler (17) mit Hilfe einer Dichtung (19) und einer Druckschraube (20) dicht und lösbar eingesetzt ist. Zur Drehung des Schieberelements (4) ist eine im Gehäuseteil (3) drehbar gelagerte Spindel (12) mit einem Handgriff (13) vorgesehen. Soll der Messfühler (17) ausgebaut werden, so wird lediglich der Handgriff (13) des Schieberelements (4) um 90° gedreht. Hierdurch wird die Rohrleitung abgesperrt und die Durchgangsbohrung (9) von beiden Enden der Rohrleitung abgetrennt.

EP 0 154 960 A1

PATENTANWÄLTE
DIPL.-ING. F. W. MÖLL · DIPL.-ING. H. CH. BITTERICH
ZUGELASSENE VERTRETER VOR DEM EUROPÄISCHEN PATENTAMT
6740 LANDAU/PFALZ
LANGSTRASSE 5

0154960

Me.

Elster AG, Meß- und Regeltechnik

6700 Ludwigshafen (Bundesrepublik Deutschland)

M. K. Juchheim GmbH & Co.

6400 Fulda (Bundesrepublik Deutschland)

## Meßvorrichtung zum Messen der Temperatur in einer Rohrleitung

Die Erfindung bezieht sich auf eine Meßvorrichtung zur Erfassung von Meßgrößen eines eine Rohrleitung durchströmenden Mediums mit einem quer zur Strömungsrichtung in das Medium ragenden Meßfühler.

Eine genaue Messung beispielsweise der Temperatur eines eine Rohrleitung durchströmenden Mediums ist erforderlich, um bei Heizanlagen die Wärmemenge zu ermitteln, die an einzelne Heizkreise abgegeben wird. Dabei ist man im allgemeinen bestrebt, den Temperaturfühler unmittelbar in die Heizflüssigkeit zu tauchen, um die

POSTFACH 2080 · TELEFON (0 63 41) 2 00 35, 8 70 00 · TELEX 453 333 TELEGRAMME: INVENTION
DEUTSCHE BANK LANDAU 0215400 (BLZ 54670095) · POSTSCHECK LUDWIGSHAFEN 27562-676

0154960

Abweichung der gemessenen Temperatur von der tatsächlichen Temperatur der Flüssigkeit so klein wie möglich zu halten. Bei einem solchen Direkteinbau des Temperaturfühlers in die Rohrleitung ergibt sich aber das Problem daß zunächst die Rohrleitung entleert werden muß, wenn der Temperaturfühler zu Eichzwecken oder bei einer Reparatur herausgenommen werden muß. Seither wurde dieses Problem in der Regel dadurch gelöst, daß der Temperaturfühler in eine Tauchhülse eingesetzt wird, die in die Rohr leitung ragt. Durch die Verwendung einer solchen Tauchhülse verschlechtert sich aber der Wärmeübergang zum Temperaturfühler erheblich und es treten Temperaturverluste durch die Wärmeleitung der Tauchhülse auf, so daß die Temperaturmessung erheblich von der tatsächlichen Temperatur der Flüssigkeit abweicht. In der Praxis wurden Abweichungen bis 8 K gemessen. Solche Abweichungen führen aber zu einer Ungenauigkeit bei der Ermittlung des Wärmeverbrauchs. Ähnliche Problematik liegt vor bei der Erfassung anderer physikalischer Eigenschaften, z. B. des Drucks, der Leitfähigkeit, des pH-Werts, der Strömungsgeschwindigkeit usw.

Der Erfindung liegt die Aufgabe zugrunde, eine Meßvorrichtung zu schaffen, die ein unmittelbares Eintauchen des Meßfühlers in das Medium gestattet und ein Ausbauen des Meßfühlers ohne Entleerung der Rohrleitung ermöglicht.

Zur Lösung dieser Aufgabe ist erfindungsgemäß ein in die Rohrleitung einsetzbares Schieber-Absperrventil vorgesehen, dessen Schieberelement auf einer Seite koaxial zu seiner Drehachse eine Bohrung aufweist, durch die der Meßfühler von außen in den Strömungskanal des Schieberelements ragt.

Hierdurch wird erreicht, daß der Meßfühler in der Offenstellung des Absperrventils unmittelbar in das strömende Medium eintaucht und dadurch eine optimale Messung der Temperatur des Mediums ermöglicht. Soll der Meßfühler ausgebaut werden, so wird der Schieber in seine Sperrstellung bewegt, wodurch der Strömungskanal im Schieberelement vollständig von der Rohrleitung getrennt wird. Der Meßfühler kann nun ausgebaut werden, wobei die in der Rohrleitung herrschenden Druck- und Temperaturbedingungen bestehen bleiben können, da nur der Strömungskanal des Schieberelements nach außen geöffnet wird.

Die Erfindung hat weiterhin den Vorteil, daß die Abmessungen von Meßfühler und durchströmtem Kanalquerschnitt genau aufeinander abgestimmt werden können, so daß optimale Meßbedingungen entstehen. Durch die Herstellung einer baulichen Einheit aus Meßfühler und Absperrventil werden Einbaufehler vermieden und die Erzielung eines guten Meßergebnisses gewährleistet. Ferner besteht mit der erfindungsgemäßen Meßvorrichtung eine zusätzliche Absperrmöglichkeit, wenn an der Verschraubung des Meßfühlers eine Leckage auftreten sollte.

Eine bevorzugte Ausgestaltung der Erfindung besteht darin, daß der Meßfühler in einer Bohrung des Ventilgehäuses befestigt und abgedichtet ist. Diese Bauweise ist besonders bei Absperrventilen von kleinerer Nennweite von Vorteil, da die Abmessungen des Schieberelements klein sein können. Besonders zweckmäßig ist diese Bauweise, wenn das Absperrventil ein Kugelhahn ist.

Für größere Nennweiten werden häufig Drehschieber-Absperrventile verwendet, bei denen ein zylindrisches oder kegelstumpfförmiges Schieberelement an einem oder beiden Enden aus dem Ventilgehäuse herausragt. Das Schieberelement bzw. Küken kann eingedichtet oder eingeschliffen sein. Bei eingeschliffenem Küken kann auf elastomere Dichtungen verzichtet werden. Hierbei wird vorteilhafterweise der Meßfühler in der Bohrung des Schieberelements befestigt und abgedichtet.

Zu seiner Befestigung weist der Meßfühler vorteilhaft einen Bund auf, mit dem er von einer Druckschraube gegen eine Dichtung im Ventilgehäuse bzw. im Schieberelement andrückbar ist. Durch diesen Bund kann die richtige Eintauchtiefe des Meßfühlers festgelegt werden, insbesondere, wenn die axiale Bohrung eine Stufenbohrung ist.

Weitere Vorteile und Merkmale der Erfindung ergeben sich aus der nachfolgenden Beschreibung von in der Zeichnung dargestellten Ausführungsbeispielen. Es zeigen:

Fig. 1 einen Schnitt durch eine Meßvor- richtung, bei der das Absperr- ventil als Kugelhahn, und

Fig. 2 einen Schnitt durch eine Meßvor- richtung, bei der das Absperr- ventil als Kegelhahn ausgebildet ist.

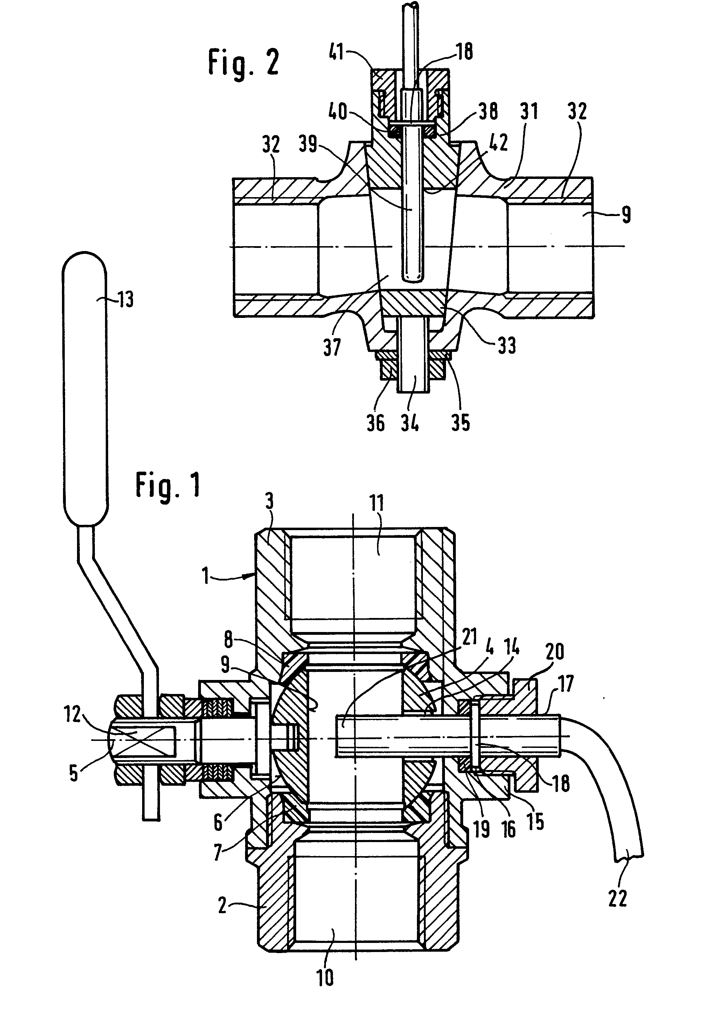

Fig. 1 zeigt einen Schnitt in Durchflußrichtung durch eine Meßvorrichtung, bei der das Absperrventil als Kugelhahn ausgebildet ist. Der Kugelhahn besteht aus einem annähernd zylindrischen Gehäuse 1, das durch die metallisch dicht miteinander verschraubten Gehäuse-

0154960

teile 2, 3 gebildet wird. In der Mitte des Gehäuses 1 ist ein Schieberelement 4 um eine Achse 5 drehbar angeordnet, dessen kugelige Außenfläche 6 in Gleitdichtringen 7, 8 gelagert ist. Das Schieberelement 4 hat eine senkrecht zu seiner Drehachse angeordnete, mittige Durchgangsbohrung 9, die in der dargestellten Position des Schieberelements 4 koaxial zu den Anschlußbohrungen 10, 11 in den Gehäuseteilen 2, 3 liegt und einen die Anschlußbohrungen 10, 11 miteinander verbindenden Strömungskanal bildet. Zur Drehung des Schieberelements 4 ist eine im Gehäuseteil 3 drehbar gelagerte Spindel 12 mit einem Handgriff 13 vorgesehen.

Auf der der Spindel 12 gegenüberliegenden Seite weist das Schieberelement 4 eine koaxial zur Achse 5 verlaufende Bohrung 14 und das Gehäuseteil 3 einen Anschlußstutzen 15 mit einer ebenfalls koaxial zur Achse verlaufenden Anschlußbohrung 16 auf. In die Bohrung 14 und die Anschlußbohrung 16 ist ein Meßfühler 17 in Form eines zylindrischen Stifts eingesetzt. Der Meßfühler 17 ruht mit einem Bund 18 auf einem Dichtring 19, der an einer Stufe in der Bohrung 16 anliegt. Durch eine Druckschraube 20 ist der Meßfühler 17 in der Anschlußbohrung 16 gehalten. Die Länge des Meßfühlers 17 ist so bemessen, daß er in seiner Einbaulage mit seinem Meßkopf 21 bis in die Mitte der Durchgangsbohrung 9 ragt. Ein Kabel 22 dient zum Anschluß des Meßfühlers 17 an ein Meßgerät.

Zum Einbau der beschriebenen Meßvorrichtung beispielsweise zur Temperaturmessung im Vorlauf oder Rücklauf eines Heizungskreises werden die beiden Enden der Rohrleitung in die Anschlußbohrungen 10, 11 eingeschraubt.

In der gezeigten Offenstellung des Schieberelements 4 ragt der Temperaturfühler 17 unmittelbar in das Wärmetransportmedium. Hierdurch ist eine genaue Temperaturmessung mit geringster Grädigkeit gewährleistet.

Soll der Meßfühler 17 zu Eichzwecken oder auch bei einem Defekt ausgebaut werden, so ist es lediglich erforderlich, mit Handgriff 13 das Schieberelement 4 um 90 Grad zu drehen. Hierdurch wird die Rohrleitung gesperrt und die Durchgangsbohrung 9 von beiden Enden der Rohrleitung abgetrennt. Der Meßfühler 17 kann nun durch Lösen der Druckschraube 20 herausgenommen werden, ohne daß dadurch das Leitungssystem geöffnet wird. Das Herausnehmen des Meßfühlers 17 ist somit ohne eine Änderung des Drucks oder der Temperatur in der Rohrleitung möglich, so daß der betriebliche Aufwand zur Durchführung dieser Maßnahme nicht größer ist als bei einer aus meßtechnischen Gründen problematischen Verwendung eines Tauchrohres.

Fig. 2 zeigt im Querschnitt einen Hahn mit einem etwa kegelförmigen Gehäuse 31 mit beiderseitigen Gewindeanschlüssen 32 zur Verbindung mit einer Rohrleitung. In das Gehäuse 31 ist ein Küken 33 eingeschliffen, das oben mit einem Vierkant 38 und unten mit einem Gewindezapfen 34 versehen ist. Das Küken 33 ist mit einer Bohrung 37 quer durchbohrt. Es wird mit einer auf den Gewindezapfen 34 aufgeschraubten Mutter 36 unter Zwischenlage einer Unterlegscheibe 35 in dem Gehäuse 31 festgehalten. Auf eine besondere elastomere Dichtung kann hier verzichtet werden.

Das Küken 33 ist axial von oben angebohrt, so daß ein Meßfühler 39 eingesetzt werden kann. Zwischen Meßfühler 39 und Küken 33 erkennt man einen O-Ring 40, der mit Hilfe einer Druckschraube 41, die in ein Gewinde in der axialen Bohrung 42 eingeschraubt werden kann, so verquetscht wird, daß er den Spalt zwischen dem Meßfühler 39 und dem Küken 33 abdichtet.

In der gezeichneten Stellung des Kükens 33 kann auch hier das Meßmedium durch die Rohrleitung bzw. den Hahn 31 fließen und dabei den Meßfühler 39 direkt umströmen. Damit kann der Meßfühler 39 die zu messende Eigenschaft des Meßmediums, beispielsweise dessen Temperatur, unmittelbar erfassen.

Für eine Demontage des Meßfühlers 39 wird das Küken 33 um 90° gedreht, so daß die Rohrleitung abgesperrt ist. Nach dem Herausschrauben der Druckschraube 41 kann der Meßfühler 39 problemlos demontiert, geprüft, ausgetauscht und wieder montiert werden.

Patentansprüche:

1. Meßvorrichtung zur Erfassung von Meßgrößen eines eine Rohrleitung durchströmenden Mediums mit einem quer zur Strömungsrichtung in das Medium ragenden Meßfühler, gekennzeichnet durch ein in die Rohrleitung einsetzbares Schieber-Absperrventil (1), dessen Schieberelement (4, 34) auf einer Seite koaxial zu seiner Drehachse (5) eine Bohrung (14, 42) aufweist, durch die der Meßfühler (17) von außen in den Strömungskanal (9) des Schieberelements ragt.

2. Meßvorrichtung nach Anspruch 1, dadurch gekennzeichnet, daß der Meßfühler (17) in einer Bohrung (16) des Ventilgehäuses (2, 3) befestigt und abgedichtet ist.

3. Meßvorrichtung nach Anspruch 1, dadurch gekennzeichnet, daß der Meßfühler (17, 39) in der Bohrung (42) des Schieberelements (4, 38) befestigt und abgedichtet ist.

4. Meßvorrichtung nach Anspruch 2 oder 3, dadurch gekennzeichnet, daß die Bohrung (14, 16) eine Stufenbohrung ist.

5. Meßvorrichtung nach Anspruch 2, 3 oder 4, dadurch gekennzeichnet, daß in die axiale Bohrung (14, 16) ein Gewinde eingeschnitten ist, auf das eine Druckschraube (11, 20) aufschraubbar ist.

0154960

6. Meßvorrichtung nach Anspruch 1 bis 5, dadurch gekennzeichnet, daß eine Dichtung (10, 19) in die axiale Bohrung (14, 16, 42) eingesetzt ist.

7. Meßvorrichtung nach Anspruch 6, dadurch gekennzeichnet, daß die Dichtung (10, 19) ein O-Ring ist.

8. Meßvorrichtung nach einem vorhergehenden Anspruch, dadurch gekennzeichnet, daß der Meßfühler (17) einen Bund (18) aufweist, mit dem er von der Druckschraube (11, 20) gegen die Dichtung (10, 19) im Gehäuse (1, 31) bzw. im Schieberelement (4, 34) andrückbar ist.

9. Meßvorrichtung nach Anspruch 1, dadurch gekennzeichnet, daß das Absperrventil ein Kugelhahn (1) ist.

10. Meßvorrichtung nach Anspruch 1, dadurch gekennzeichnet, daß das Absperrventil ein Kegelhahn (31) mit einem eingedichteten oder eingeschliffenem Küken (33) ist.

11. Meßvorrichtung nach Anspruch 5, dadurch gekennzeichnet, daß die Druckschraube (11, 20) plombierbar ist.

Fig. 2

Fig. 1

0154960

Europäisches
Patentamt

**EUROPÄISCHER RECHERCHENBERICHT**

Nummer der Anmeldung

| | **EINSCHLÄGIGE DOKUMENTE** | | EP 85102738.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 2 438 310 (DR.C.OTTO & CO GMBH)<br><br>* Fig. 2; Seite 3, 2. Absatz *<br><br>-- | 1,9 | G 01 K 1/14 |
| A | CH - A5 - 568 570 (INTER CONTROL)<br><br>* Fig. *<br><br>---- | 1 | |

| | RECHERCHIERTE SACHGEBIETE (Int. Cl.4) |
|---|---|
| | G 01 K 1/00 |

Der vorliegende Recherchenbericht wurde für alle Patentansprüche erstellt.

| Recherchenort | Abschlußdatum der Recherche | Prüfer |
|---|---|---|
| WIEN | 05-06-1985 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82